# EUROPEAN PATENT SPECIFICATION

(11) **EP 0 765 201 B1**
(45) Date of publication and mention of the grant of the patent: **14.07.1999**
(21) Application number: 95922818.0
(22) Date of filing: 31.05.1995
(51) Int. Cl.: B23B 51/00, B23B 41/02, B23P 15/28

(54) **DRILLING TOOL WITH ROUNDED INSERT SUPPORT SURFACES**
BOHRWERKZEUG MIT AUSNEHMUNGEN FÜR ABGERUNDETE SCHNEIDEINSÄTZE
OUTIL DE PER AGE DOTE DE SURFACES DE SUPPORT DE PIECES RAPPORTEES ARRONDIES

(30) Priority: 13.06.1994 SE 9402036
(43) Date of publication of application: 02.04.1997
(73) Proprietor: SANDVIK AKTIEBOLAG, 811 81 Sandviken (SE)
(72) Inventor: BLOMBERG, Torsten, S-811 36 Sandviken (SE); SANDBERG, Lars, S-753 26 Uppsala (SE)
(86) International application number: PCT/SE95/00615
(87) International publication number: WO 95/34397

(56) References cited:
- WO-A-94/15740
- DE-A- 2 316 762
- DE-B- 2 600 225
- SE-B- 347 450
- SE-B- 468 930
- US-A- 5 302 059
- DERWENT'S ABSTRACT, No. J9464B/42, Week 7942; & SU,A,643 252 (RADOSHCHEKIN), 25 January 1979.

## Description

The present invention relates to a drilling tool for chip-breaking machining of metallic materials in accordance with the preamble of claim 1 and as known from EP-A-491670.

It is known to use cutting inserts of cemented carbide for drills, which inserts are fastened by mechanical fastening arrangements, said inserts being provided with one or more recesses in the chip surface for chip-breaking purposes. Such drills are for instance known from US-A-4 215957. However, it has turned out that it has not been possible to attain the optimal, desirous formation of chips. Thus, it has turned out to be impossible to attain the desired short comma-formed chips, at the same time as it has been impossible to reduce the effect consumption when running the drill in the desired way.

Further, in EP-A-491 670 a drilling tool is described comprising a drill body on which two or more cutting inserts are mounted. The inserts are substantially formed as parallel-trapezoids and are axially mounted, i.e., the abutment surfaces of the cutting inserts extend axially, the inserts suitably being fixed by brazing. This makes the brazing of the inserts more difficult, since the accessability to the inserts in axial direction is considerably reduced in the chip flute or canal. Moreover, it is difficult to access with the milling tool downwardly in the chip flute in the cases when the insert seats or pockets are to be milled out. A further drawback with this construction is that the axial extension of the inserts are bulky and that the chip flutes or canals become long and this increases the risk for chip jamming. Furthermore, the long chip flutes have the consequence that one has to mill relatively deeply, with large over-hangs as a result.

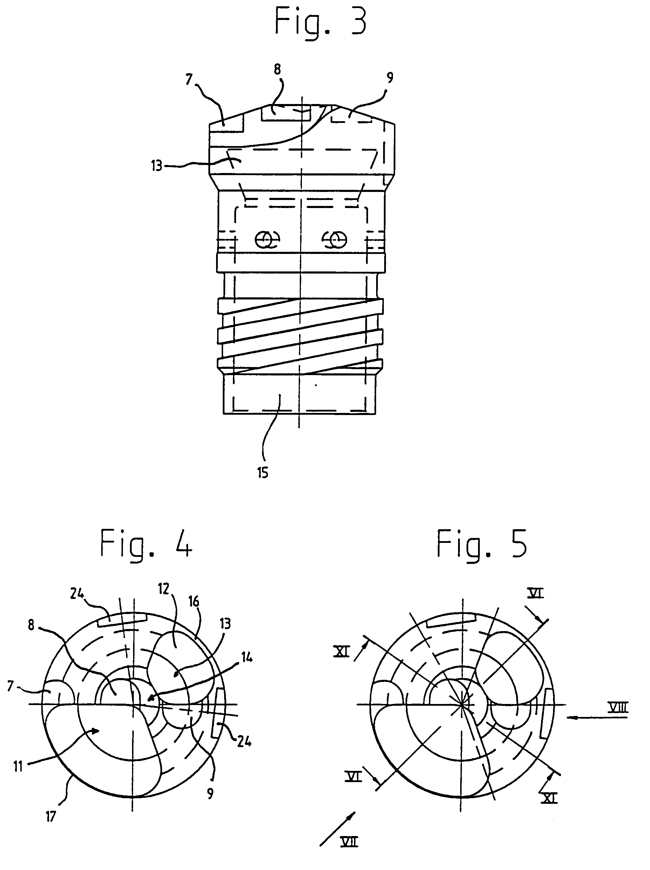

In EP-A-240 759 a drilling tool is disclosed with tangential positioning of the drilling inserts on the upper or end-side of the drill head. Admittedly, this has made possible shorter chip flutes and, consequently, a decreased risk for chip jamming. On the other hand, the drill inserts and/or the tangential insert seats is/are unnecessarily complicated. Thus, the inserts shown in figure 3 of this citation are apt to break, on one hand because of the included 90°-angles which function as kerfs, and on the other hand because of the complicated geometry, which causes compacting problems when the inserts are pressed. Moreover, the insert seats necessitate a relatively complicated and very precision-demanding milling operation in order to obtain a satisfactory abutment against the insert, particularly since the latter is fastened by screwing and not by soldering.

Thus, a primary object of the present invention is to provide a drilling tool that is easy to manufacture.

A second object of the present invention is to as far as possible simplify the production of the insert pockets in a drill head, particularly in an ejector drill head, and also the production of the cutting inserts, particularly by avoiding all compacting problems when pressing them.

Another object of the present invention is to bring down the number of different cutting inserts to a minimum, in particular to only one design. These and further objects have been attained in a

surprising way by providing a drilling tool comprising the features as defined in the characterizing clause of claim 1.

For illustrative but non-limiting purposes, a preferred embodiment of the invention will now be further described with reference to the appended drawings. These are herewith presented:
Figure 1 shows a mounted drilling tool according to the invention in a perspective view, obliquely from above.
Figure 2 shows a drilling cutting insert according to the invention in a perspective view, obliquely from above.
Figure 3 shows the same drilling tool as in figure 1 in a side view, however unmounted.
Figure 4 shows the drilling tool straight from above.

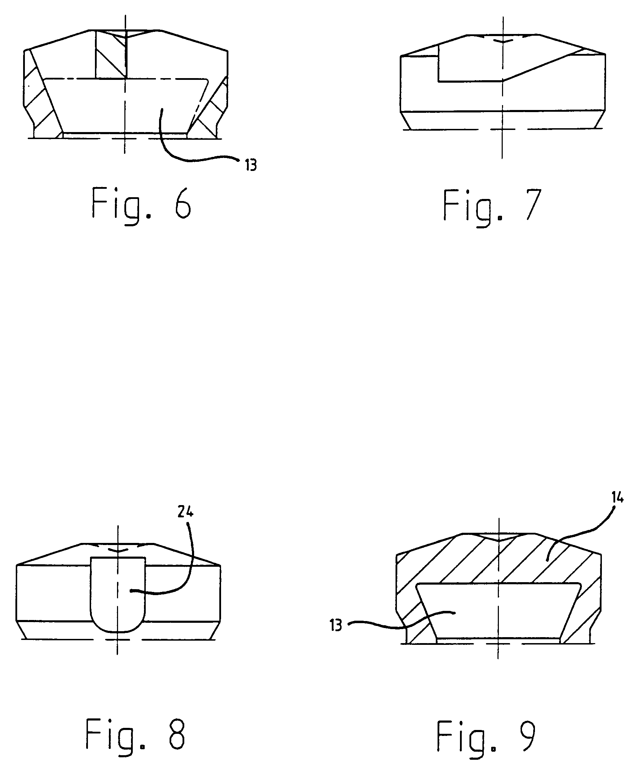

Figure 5 shows the same view as figure 4, but with the different views and sections in the figures 5 to 8 defined.
Figure 6 shows the cross-section VI-VI according to figure 5, of the upper part of the tool.
Figure 7 shows the view VII according to figure 5 of the upper part of the tool.
Figure 8 shows the view VIII according to figure 5 of the upper part of the tool.
Figure 9 shows the cross-section IX-IX according to figure 5 of the upper part of the tool.

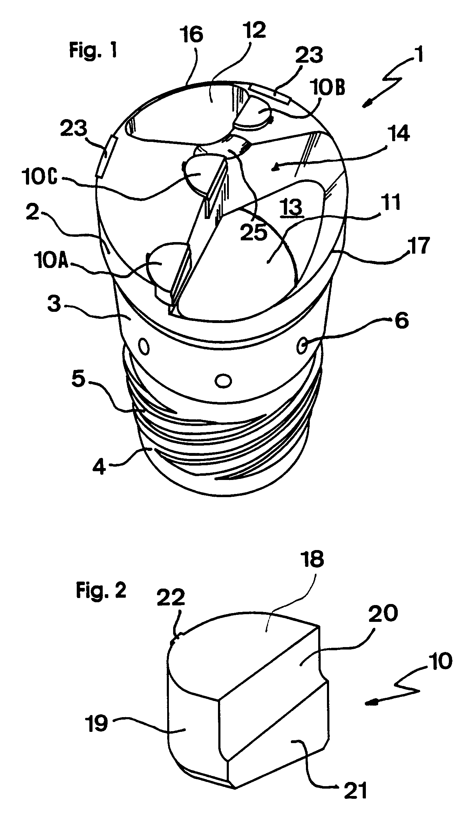

In figure 1 a drilling tool of ejector type is generally designated by reference numeral 1. Advantageously, it may also be generally used for so called BTA-drilling. The tool comprises a drilling crown or head 2, an intermediate part 3 and a shaft 4. The shaft 4 is provided with an outer thread 5, which is intended to, in a way known per se, be fixed by threading it upon a fastening outer tube (not shown). An inner tube (not shown) that is concentrical with said outer tube is inserted in a way known per se into the inner, substantially cylindrical cavity of the drill, past the cooling medium holes 6, whereby formed chips follow the cutting medium through said inner tube.

As may be seen in figures 3 and 4, the top side of the drill head is provided with three cutting insert seats or pockets 7, 8 and 9 each intended to accomodate a drill cutting insert 10. Advantageously, the three cutting inserts are equal, the only difference being that the central cutting insert is reversed in comparison to the peripheral and intermediate cutting inserts. The number of cutting inserts in an ejector drill may be chosen between one and five. However, the disadvantage with one single cutting insert is that the cutting forces that the support pads have to endure become large since the drill becomes unbalanced. It has been found that the number of three is a good compromise between complicity, life and out-balancing. The ejector drill is usually produced as a one-way drill and the cemented carbide inserts according to figure 2 are therefore soldered or brazed in the cutting pockets. Since it is of one-way type, the drill should be worn as long as possible without the product quality and the cassation risk becoming disturbing. The periphery insert 10A determines the diameter of the drilled hole, which is usually between 20 and 65 mm. Radially inwardly the cutting edge of this insert is inclined upwardly. The adjacent central cutting insert 10C in the cutting pocket 8 overlaps the center axis of the drill, since no remaining core is desired. Contrary to the peripheral insert, axially downwardly its cutting edge is inclined radially inwardly, since otherwise the trailing cutting insert would be submitted to such a large stress that it would very soon break. In agreement with the inclination of the central cutting edge, the head tip is provided with a conical cavity 25. On the opposed side of the central axis, the intermediate cutting insert 10B is in the insert pocket 9. Like the peripheral insert 10A, axially upwardly its cutting edge is inclined in direction radially inwardly. At rotation, the revolution path of the cutting edge of the intermediate insert overlaps somewhat with both the cutting edges of the peripheral and the central cutting inserts, in order to obtain a continuous cutting line from the central axis to the periphery.

Two chip canals, ducts or flutes end in the top side of the drill: one common, larger chip canal 11 for the peripheral and the central inserts, and one somewhat smaller chip canal 12 for the intermediate cutting insert. In conformity with a preferred embodiment of the present invention, the opposed, lower ends of these chip canals end in a turned-out inner chip space 13, which has a frustoconical shape, with the bottom surface turned upwards in direction towards the top side of the drill. By this chip space 13, the central and intermediate cutting inserts will be on a bridge-shaped device 14, that extends transversely over the space 13 and connects to two, substantially diametrically opposed parts of the drill's top side. Since the whole drill 1 is preferably made in one single piece, this space 13 is turned by a turning tool being introduced through opening 15 in the rear end side of the drill. This space 13 results in several advantages, of which may be mentioned increased chip space with minimized risk for chip jamming, and a lighter construction. The chip canals 11 and 12 have been milled out from above, from the drill's top side. In order to optimize the available chip space in the chip canals, the milling tool has been angled relative to the central axis of the drill, adjacent to the periphery of the drill, so that outwardly angled, bevelled surfaces have been obtained, which adjoin either to the immediate proximity of the outer envelope surface of the drill via a small land portion 16, or which directly form a break line 17 with said envelope surface.

The drilling tool according to the invention is preferably produced of one single piece. The external, rotation-symmetrical surfaces are made by turning while the other external surface portions are formed by milling. As best seen in figures 3 and 4, the insert pockets or seats 7, 8 and 9 are made in the simplest possible way, namely by one single short, straight end milling operation per insert pocket, with one and the same end mill. Thereby, the rear abutment surface of the insert pocket of course gets a rounded, semi circle-formed shape corresponding to the cutting diameter of the end mill. The inner cavity 15 is bored, whereafter as mentioned above, the chip space 13 is turned out. It may be pointed out that also the part that is occupied by the chip space 13 before then consists of a continuous portion of the boring 15.

As mentioned, figure 2 reproduces a cutting insert 10 according to the present invention. Inter alia, it comprises a relief surface 18 and a rounded edge side 19. The chip surface comprises an extended chip breaker 20 and below that a substantially plane chip surface portion 21. At the rear, on the rounded edge side of the cutting insert, it may be provided with a distance knob 22 which sets aside any interferences when positioning the insert in the insert pocket due to unevennesses that may arise when the inserts are pressed. Moreover, the distance knob 22 minimizes the risk for any positioning discrepancies caused by the varying thickness of the solder layer, by the fact that the contact between the two opposed semi circle-shaped surfaces becomes minimal.

The rounded back of the cutting insert gives a considerably reduced risk for the formation of cracks, since it permits a favourable stress picture without any sharp corners which involve stess concentrations. Further, since the length of the insert is large in comparison to the insert width, a larger support area is obtained for taking up cutting forces. Moreover, the insert shape is very favourable being pressed and does not cause any compacting problems whatsoever.

In order to absorb radial cutting forces, the drill according to the invention is equipped with support pads 23 which are soldered or brazed in the support pad pockets 24. Also these support pad pockets are suitably milled out by one sole straight milling operation with an end mill, in the same way as the insert pockets 7, 8 and 9. The support pad may suitably have a matching shape, i.e., an elongated body with a rounded end. Furthermore, the outer side of the support pad is suitably given a rounded form, in the shape of a cylinder surface segment, in order to substantially conform with the substantially cylindrical envelope surface of the drill.

Both at the mounting of the inserts and of the support pads, the rounded rear abutment surface functions for guidance in the initial stage of the mounting, i.e., it permits a certain dislocation laterally, which is a necessity for automated mounting.

## Claims

1. Drilling tool primarily intended for ejector drilling, comprising a drill body (1) of substantially cylindrical tube form, whose one end comprises an opening (15) to an inner cavity and whose other end is an operative top side which is provided with one or more cemented carbide cutting inserts (10) which are soldered in insert seats or pockets (7, 8, 9) provided for this purpose, the insert seats or pockets (7, 8, 9) and the cutting inserts (10) being tangentially located in the top side of the drill body, **characterised** in that the rear abutment sides of the insert seats or pockets and the corresponding rear abutment sides (19, 25) of the cutting inserts have a rounded, substantially semi circle-formed shape.

2. Drilling tool according to claim 1, **characterized** in that it comprises three cutting inserts, namely a peripheral insert (10A), an intermediate insert (10B) and a central insert (10C).

3. Drilling tool according to claim 2, **characterized** in that two chip canals (11, 12) end in its top side, the one chip canal (11) leading away the chips originating from the peripheral insert (10A) and the central insert (10C) while the other chip canal (12) leads away the chips originating from the intermediate insert (10B).

4. Drilling tool according to claim 3, **characterized** in that the two chip canals (11, 12) lead to a turned-out chip space (13), which substantially has a frustoconical shape with the base surface turned upwardly, in direction towards the top side of the tool.

5. Drilling tool according to any of the preceding claims, **characterized** in that the drill body is made of one single work-piece.

6. Drilling tool according to any of the preceding claims, **characterized** in that the drill body comprises one or several support pads (23), which are soldered in corresponding recesses (24) on the outer envelope surface of the drill body, both support pads and corresponding recesses comprising two substantially parallel long sides and a substantially semi circle-formed end side.

## Patentansprüche

1. Bohrwerkzeug, das hauptsächlich zum Ejektorbohren bestimmt ist, mit einem Bohrkörper (1) von im wesentlichen Zylinderrohrform, dessen eines Ende eine Öffnung (15) zu einem inneren Hohlraum aufweist und dessen anderes Ende eine Betriebsoberseite ist, welche mit einem oder mehreren Schneideinsätzen (10) aus Sinterkarbid versehen ist, die in zu diesem Zweck vorgesehenen Einsatzsitzen oder -taschen (7, 8, 9) gelötet sind, wobei die Einsatzsitze oder -taschen (7, 8, 9) und die Schneideinsätze (10) tangential in der oberen Seite des Bohrkörpers angeordnet sind, **dadurch gekennzeichnet, daß** die rückwärtigen Widerlagerseiten der Einsatzsitze oder -taschen und die entsprechenden rückwärtigen Widerlagerseiten (19, 25) der Schneideinsätze eine abgerundete, im wesentlichen halbkreisförmige Gestalt haben.

2. Bohrwerkzeug nach Anspruch 1, dadurch gekennzeichnet, daß es drei Schneideinsätze aufweist, nämlich einen Umfangseinsatz (10A), einen Zwischeneinsatz (10B) und einen Mitteleinsatz (10C).

3. Bohrwerkzeug nach Anspruch 2, dadurch gekennzeichnet, daß zwei Spankanäle (11, 12) in seiner oberen Seite enden, wobei ein Spankanal (11) die aus dem Umfangseinsatz (10A) und dem Mitteleinsatz (10C) stammenden Späne wegführt, während der andere Spankanal (12) die aus dem Zwischeneinsatz (10B) stammenden Späne wegführt.

4. Bohrwerkzeug nach Anspruch 3, dadurch gekennzeichnet, daß die zwei Spankanäle (11, 12) zu einem nach außen gedrehten Spanraum (13) führen, der im wesentlichen kegelstumpfförmig ist, wobei die Basisoberfläche nach oben in Richtung gegen die Oberseite des Werkzeuges gedreht ist.

5. Bohrwerkzeug nach einem der vorhergehenden Ansprüche, dadurch gekennzeichnet, daß der Bohrkörper aus einem einzigen Werkstück hergestellt ist.

6. Bohrwerkzeug nach einem der vorhergehenden Ansprüche, dadurch gekennzeichnet, daß der Bohrkörper eines oder mehrere Stützpolster (23) aufweist, die in entsprechenden Ausnehmungen (24) auf der äußeren Hülloberfläche des Bohrkörpers gelötet sind, wobei beide Stützpolster und die entsprechenden Ausnehmungen zwei im wesentlichen parallele Längsseiten und eine im wesentlichen halbkreisförmige Endseite aufweisen.

## Revendications

1. Outil de perçage principalement destiné à un perçage avec éjection, comprenant un corps de foret (1) de forme tubulaire pratiquement cylindrique, dont une première extrémité comprend une ouverture (15) vers une cavité interne et dont l'autre extrémité est une face supérieure active qui est munie d'une ou de plusieurs plaquettes de coupe en carbure cémenté (10), qui sont soudées dans des sièges ou poches pour plaquette (7, 8, 9) prévues dans ce but, les sièges ou poches pour plaquette (7, 8, 9) et les plaquettes de coupe (10) étant situés de façon tangentielle dans la face supérieure du corps de foret, caractérisé en ce que les faces de butée arrière des sièges ou poches pour plaquette et les faces de butée arrière correspondantes (19, 25) des plaquettes de coupe présentent une forme arrondie, essentiellement en forme de demi-cercle.

2. Outil de perçage selon la revendication 1, caractérisé en ce qu'il comprend trois plaquettes de coupe, à savoir une plaquette périphérique (10A), une plaquette intermédiaire (10B) et une plaquette centrale (10C).

3. Outil de perçage selon la revendication 2, caractérisé en ce que deux canaux à copeaux (11, 12) se terminent dans sa face supérieure, le premier canal à copeaux (11) évacuant les copeaux provenant de la plaquette périphérique (10A) et de la plaquette centrale (10C) tandis que l'autre canal à copeaux (12) évacue les copeaux provenant de la plaquette intermédiaire (10B).

4. Outil de perçage selon la revendication 3, caractérisé en ce que les deux canaux à copeaux (11, 12) conduisent à un espace à copeaux usiné au tour (13), qui présente pratiquement une forme tronconique dont la face de base est tournée vers le haut, en direction de la face supérieure de l'outil.

5. Outil de perçage selon l'une quelconque des revendications précédentes, caractérisé en ce que le corps de foret est fait d'une seule pièce.

6. Outil de perçage selon l'une quelconque des revendications précédentes, caractérisé en ce que le corps de foret comprend un ou plusieurs patins de support (23), qui sont soudés dans des évidements correspondants (24) sur la surface d'enveloppe extérieure du corps de foret, à la fois les patins de support et les évidements correspondants comprenant deux côtés longs pratiquement parallèles et une face d'extrémité essentiellement en forme de demicercle.
